(19) Europäisches Patentamt / European Patent Office / Office européen des brevets

(11) **EP 4 625 266 A1**

(12) **EUROPEAN PATENT APPLICATION**

(43) Date of publication:
**01.10.2025 Bulletin 2025/40**

(21) Application number: **24166153.7**

(22) Date of filing: **26.03.2024**

(51) International Patent Classification (IPC):
**G06N 10/40** *(2022.01)*

(52) Cooperative Patent Classification (CPC):
**G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **QuiX Quantum BV**
**7521 AN Enschede (NL)**

(72) Inventors:
• **RENEMA, Jelmer Jan**
**7521 AN Enschede (NL)**

• **KASSENBERG, Benjamin Willem**
**7521 AN Enschede (NL)**
• **KANNAN, Narasimham**
**7521 AN Enschede (NL)**
• **SMITH, Devin**
**7521 AN Enschede (NL)**
• **KASTURE, Sachin Arvind**
**Gouda (NL)**
• **ELFVING, Vincent Emanuel**
**Amsterdam (NL)**

(74) Representative: **CMS Cameron McKenna Nabarro Olswang LLP**
**Cannon Place**
**78 Cannon Street**
**London EC4N 6AF (GB)**

(54) **DETERMINING A QUANTUM OPERATION PERFORMED BY A LINEAR-OPTICAL QUANTUM DEVICE**

(57)    A method of determining a quantum operation being implemented by a linear-optical quantum device, the method comprising: repeatedly implementing the quantum operation on the linear-optical quantum device; and detecting at each photon detector of a number of photon detectors the presence or lack of presence of at least one photon to form detection data. The method further comprises determining, by a classical computer, a set of marginal probabilities using the detection data for each repetition of the quantum operation, forming, by the classical computer, a series of polynomial equations wherein the solutions to the series of polynomial equations are the set of marginal probabilities; and solving, by the classical computer, the series of polynomial equations to obtain an estimate of the quantum operation.

FIG. 2

**Description**

Background

It is often desirable to determine a quantum operation that is being performed by a linear-optical quantum device, for example to allow the linear-optical quantum device to be verified or to recreate the behavior of the linear-optical quantum device. For example, it may be desirable to determine the quantum operation performed by the linear-optical quantum device to confirm the linear-optical quantum device is performing as expected i.e., to confirm the linear-optical quantum device is performing an expected quantum operation. Alternatively, the linear-optical quantum device can reflect a desirable probability distribution, such as the outcome of performing boson sampling. In such cases, it is desirable to determine a classical representation of the quantum operation performed by the linear-optical quantum device to enable the probability distribution to be recreated on another suitably large universal quantum computer. In addition, determining the quantum operation implemented by a linear-optical quantum device enables the performance of the linear-optical quantum device to be characterized to confirm it is implementing the intended operation. While techniques for determining a quantum operation being implemented by a linear-optical quantum device exist, these techniques can be difficult or inefficient to implement in practice.

The embodiments described below are not limited to implementations which solve any or all of the disadvantages of known techniques for determining quantum operations being performed by linear-optical quantum devices.

Summary

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A first aspect provides a method of determining a quantum operation being implemented by a linear-optical quantum device, wherein the linear-optical quantum device comprises a number of photon detectors. The method comprises repeatedly performing a method comprising: implementing the quantum operation on the linear-optical quantum device; and detecting at each photon detector of the number of photon detectors the presence or lack of presence of at least one photon to form detection data for each repetition of the quantum operation. The method further comprises determining, by a classical computer, a set of marginal probabilities using the detection data for each repetition of the quantum operation. The marginal probabilities in the set of marginal probabilities comprise $k^{th}$ order marginal probabilities wherein k ranges from 1 to c; a specific $k^{th}$ order marginal probability comprises the probability of at least a specific k of the number of photon detectors detecting a photon; and the $k^{th}$ order marginal probabilities comprise the specific $k^{th}$ order marginal probabilities for each possible selection of a specific k of the number of photon detectors from the number of photon detectors. The method also comprises forming, by the classical computer, a series of polynomial equations wherein the solutions to the series of polynomial equations are the set of marginal probabilities; and solving, by the classical computer, the series of polynomial equations to obtain an estimate of the quantum operation. This enables an estimation of the quantum operation being performed by a linear-optical quantum device to be obtained. This can be used to ensure that a linear-optical quantum device is performing the expected quantum operation. In addition, if a linear-optical quantum device is implementing an unknown quantum operation, this can be used to determine the unknown quantum operation being implemented by the linear-optical quantum device.

In some examples, the quantum operation comprises a desired quantum computation that can be represented by a unitary matrix representation of the desired quantum computation and the estimate of the quantum operation comprises a unitary matrix representation of the estimate of the quantum operation. The method then further comprises confirming, by the classical computer, whether the linear-optical quantum device is implementing the desired quantum computation by comparing the unitary matrix representation of the estimate of the quantum operation to the unitary matrix representation of the desired quantum computation using a fidelity to obtain a fidelity score; comparing the fidelity score to a threshold; and confirming the linear-optical quantum device is implementing the desired quantum computation in response to the fidelity score meeting the threshold. This enables a user of a linear-optical quantum device to confirm the linear-optical quantum device is performing as expected. In addition, if the linear-optical quantum device is a remote device being operated by a third party, this enables an instructing party to confirm the third party is implementing the desired quantum computation on the linear-optical quantum device.

In some examples, the method further comprises reproducing the quantum operation on a quantum computer different from the linear-optical quantum device by: determining, by the classical computer, at least one determined operation that needs to be implemented by the quantum computer to reproduce the quantum operation using the estimate of the quantum operation; instructing, by the classical computer, the quantum computer to implement the at least one determined operation; and implementing, by the quantum computer, the at least one determined operation. This enables a user to recreate an unknown or desired quantum operation being implemented by a linear-optical quantum device on another quantum computer such as a universal quantum computer or a linear-optical quantum computer.

A second aspect provides a method of reproducing, on a quantum computer, a probability distribution produced by a linear-optical quantum device that comprises a number of photon detectors. The method comprises obtaining, by a classical computer, a set of marginal probabilities relating to the number of photon detectors. The marginal probabilities in the set of marginal probabilities comprise $k^{th}$ order marginal probabilities wherein k ranges from 1 to c; a specific kth order marginal probability comprises the probability of at least a specific k of the number of photon detectors detecting a photon; and the $k^{th}$ order marginal probabilities comprise the specific $k^{th}$ order marginal probabilities for each possible selection of a specific k of the number of photon detectors from the number of photon detectors. The method further comprises forming, by the classical computer, a series of polynomial equations wherein the solutions to the series of polynomial equations are the marginal probabilities; solving, by the classical computer, the series of polynomial equations to obtain an estimate of the quantum operation that produced the probability distribution; determining, by the classical computer, at least one determined operation that needs to be implemented by the quantum computer to reproduce the probability distribution using the estimate of the quantum operation; instructing, by the classical computer, the quantum computer to implement the at least one determined operation; and implementing, by the quantum computer, the at least one determined operation to reproduce the probability distribution. This enables a probability distribution that has quantum properties to be recreated at a quantum computer even if the unitary operation that originally created the probability distribution is unknown. This also enables an estimate of the quantum operation that determined the probability distribution to be estimated/measured.

In some examples of the second aspect, obtaining the set of marginal probabilities comprises: repeatedly performing a method comprising: implementing the quantum operation on the linear-optical quantum device; and detecting at each photon detector of the number of photon detectors the presence or lack of presence of at least one photon to form detection data for each repetition of the quantum operation. The method then further comprises determining, by the classical computer, the marginal probabilities using the detection data for each repetition. This provides a technique for obtaining the marginal probability data for the second aspect.

In some examples of the second aspect, the probability distribution comprises a boson sampling probability distribution. This is a particularly advantageous probability distribution that cannot be created efficiently on a classical computer. In some examples of the second aspect, the probability distribution comprises a probability distribution which represents a set of samples for a machine learning application. This enables the quantum computer to be used for quantum machine learning.

In some examples of the first and second aspect, each photon detector of the number of photon detectors comprises a photon number resolving detector; and detecting at each photon detector of the number of photon detectors the presence or lack of presence of at least one photon comprises determining a number of photons present at each photon number resolving detector. The use of photon number resolving detectors enables more marginal probabilities to be calculated for the same number of photons since marginal probabilities where a single photon number resolving detector detected more than one photon can be included in the set of marginal probabilities. This can enable more polynomial equations to be formed thus improving the estimate of the quantum operation.

In some examples of the first and second aspect, the marginal probabilities in the set of marginal probabilities comprise $k^{th}$ order marginal probabilities wherein k ranges from 1 to 3 such that marginal probabilities in the set of marginal probabilities comprise first order, second order and third order marginal probabilities; and forming, by the classical computer, a series of polynomial equations from the marginal probabilities comprises forming the series of polynomial equations from the first order, the second order and the third order marginal probabilities. In some examples, only 1st, 2nd and 3rd order marginal probabilities need to be used to find an estimate of the quantum operation. This reduces the number of marginal probabilities that need to be calculated and thus the number of rounds of implementing the quantum operation and taking measurements that needs to be performed.

In some examples of the first and second aspect, the quantum computer comprises a linear-optical quantum computer comprising at least one photon source, a plurality of photon detectors, and a plurality of phase actuators; determining, by the classical computer, at least one determined operation comprises using a Clements decomposition or a Reck decomposition on the estimate of the quantum operation to determine a target phase for each phase actuator of the plurality of phase actuators; instructing, by the classical computer, the quantum computer to implement the at least one determined operation comprises tuning each phase actuator of the plurality of phase actuators to its respective target phase; and implementing, by the quantum computer, the at least one determined operation comprises using the at least one photon source to provide a plurality of photons to the plurality of phase actuators. This allows the quantum operation or probability distribution to be recreated on a linear-optical quantum computer.

In some examples of the first and second aspect, solving, by the classical computer, the series of polynomial equations comprises solving, by the classical computer, the series of polynomial equations using a Groebner basis method. The Groebner basis method provides a convenient way to solve the series of polynomial equations and thus enables the estimate of the quantum operation to be obtained.

A third aspect provides a system comprising a linear-optical quantum device and a classical computer. The linear-optical quantum device comprises at least one photon source, wherein each photon source of the at least one photon source is configured to repeatedly output a photon; a number of phase actuators configured to repeatedly implement a quantum operation on the photons output by the plurality of photon sources; and a number of photon detectors, wherein each photon detector of the number of photon detectors is configured to repeatedly detect the presence or lack of presence of a photon at the respective photon detector to form detection data for the number of photon detectors. The classical computer comprises a processor; and a memory, the memory comprising computer-readable instructions that when implemented by the processor cause the processor to determine a set of marginal probabilities using the detection data. The marginal probabilities in the set of marginal probabilities comprise $k^{th}$ order marginal probabilities wherein k ranges from 1 to c; a specific kth order marginal probability comprises the probability of at least a specific k of the number of photon detectors detecting a photon; and the $k^{th}$ order marginal probabilities comprise the specific $k^{th}$ order marginal probabilities for each possible selection of a specific k of the number of photon detectors from the number of photon detectors. The processor is further caused to form a series of polynomial equations wherein the solutions to the series of polynomial equations are the set of marginal probabilities; and solve the series of polynomial equations to obtain an estimate of the quantum operation. This provides a system that enables the quantum operation being performed by the linear-optical quantum device to be estimated. This can then be used to determine the linear-optical quantum device is performing the expected operation or to determine/measure an unknown quantum operation being implemented by the linear-optical quantum device.

A fourth aspect provides a system configured to reproduce a probability distribution produced by a linear-optical quantum device comprising a number of photon detectors, the system comprises a classical computer and a quantum computer. The classical computer comprises a processor; and a memory, the memory comprising computer-readable instructions that when implemented by the processor are configured to cause the processor to obtain a set of marginal probabilities relating to the number of photon detectors. The marginal probabilities in the set of marginal probabilities comprise $k^{th}$ order marginal probabilities wherein k ranges from 1 to c; a specific $k^{th}$ order marginal probability comprises the probability of at least a specific k of the number of photon detectors detecting a photon; and the kth order marginal probabilities comprise the specific $k^{th}$ order marginal probabilities for each possible selection of a specific k of the number of photon detectors from the number of photon detectors. The processor is further caused to form a series of polynomial equations wherein the solutions to the series of polynomial equations are the marginal probabilities; solve the series of polynomial equations to obtain an estimate of the quantum operation that produced the probability distribution; determine, using the estimate of the quantum operation, at least one determined operation that need to be implemented by a quantum computer to cause the quantum computer to reproduce the probability distribution; and instruct the quantum computer to implement the at least one determined operation. The quantum computer comprises a quantum processor configured to: implement, in response to instructions from the classical computer, the at least one determined operation to reproduce the probability distribution. This provides a system for recreating a probability distribution that occurs at a linear-optical quantum device. This also provides a technique for recreating a quantum operation being implemented at the linear-optical quantum device.

In some examples of the fourth aspect, the system further comprises the linear-optical quantum device. The linear-optical quantum device comprises: a quantum processor configured to repeatedly implement the quantum operation that produces the probability distribution; and the number of photon detectors, wherein each photon detector of the number of photon detectors is configured to repeatedly detect the presence or lack of presence of a photon at the respective photon detector to form detection data for the number of photon detectors. This enables the required data to be extracted from the linear-optical quantum device.

In some examples of the fourth aspect, the quantum computer comprises a linear-optical quantum computer comprising at least one photon source and a plurality of photon detectors; the quantum processor of the quantum computer comprises a plurality of phase actuators; determining the at least one determined operation comprises using a Clements decomposition or a Reck decomposition on the estimate of the quantum operation to determine a target phase for each phase actuator of the plurality of phase actuators; instructing, by the classical computer, the quantum computer to implement the at least one determined operation comprises tuning each phase actuator of the plurality of phase actuators to its respective target phase; and implementing, by the quantum computer, the at least one determined operation comprises using the at least one photon source to provide a plurality of photons to the plurality of phase actuators. This enables the quantum operation to be recreated on a linear-optical quantum computer.

In some examples of the third and fourth aspects, solving the series of polynomial equations comprises solving the series of polynomial equations using a Groebner basis method. This provides a convenient method of solving the series of polynomial equations.

In some examples of the third and fourth aspects, the marginal probabilities in the set of marginal probabilities comprise $k^{th}$ order marginal probabilities wherein k ranges from 1 to 3 such that marginal probabilities in the set of marginal probabilities comprise first order, second order and third order marginal probabilities; and forming a series of polynomial equations from the marginal probabilities comprises forming the series of polynomial equations from the first order, the second order and the third order marginal probabilities. Using only the $1^{st}$, $2^{nd}$ and $3^{rd}$ order marginal probabilities reduces the number of measurements that needs to be taken to determine the marginal probabilities and hence increases the efficiency of determining an estimate of or recreating the quantum operation.

The methods described herein with respect to a classical computer may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1 is a schematic diagram of a linear-optical quantum device which may be used to perform the quantum operation to be determined;

Figure 2 is a flow diagram of a method of determining a quantum operation being performed by a linear-optical quantum device;

Figure 3 is an illustration of the elements of a unitary matrix representation of a quantum operation that are used in calculating a $3^{rd}$ order marginal probability for a 5x5 unitary matrix representation.

Figure 4 is a flow diagram of a method of confirming/validating the performance of a linear-optical quantum device;

Figure 5 is a flow diagram of a method of recreating a quantum operation being implemented by a linear-optical quantum device;

Figure 6 is a flow diagram of a method of reproducing on a quantum computer a probability distribution produced by a linear-optical quantum device; and

Figure 7 is an example classical computing device that can be used to implement some of the calculations of the methods of the present disclosure.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

In a first example, this application relates to estimating a quantum operation being implemented by a linear-optical quantum device. In some examples, the linear-optical quantum device may comprise a linear-optical quantum computer that is supposedly implementing a desired quantum operation or quantum computation. The user may wish to confirm the linear-optical quantum computer is indeed implementing the desired quantum operation. For example, the user may wish to confirm the linear-optical quantum computer is performing as expected to verify or validate the linear-optical quantum computer by characterizing or otherwise estimating the operation being performed by the linear-optical quantum computer. In addition, if the linear-optical quantum computer is being run by a third-party, for example in the cloud, the user may wish to confirm that the third party is indeed running the claimed desired operation on the linear-optical quantum computer by characterizing or otherwise estimating the quantum operation being performed by the linear-optical quantum computer. In these examples, the techniques of this application can be used to confirm or validate the quantum operation being implemented by the linear-optical quantum computer. In other examples, the linear-optical quantum device may be implementing an operation that the user wishes to characterize or otherwise determine. The techniques of this application can then be used to determine an estimate of this operation and thus characterize the behavior of the linear-optical quantum device. Once an estimate of the operation has been determined, this can be broken down into determined operations that enable the quantum operation to be recreated on another quantum computer in the form of either another linear-optical quantum computer or a universal quantum computer. Thus, in some examples, the linear-optical quantum device is then simulated by performing the quantum operation previously performed on the linear-optical quantum device on another quantum computer such as another linear-optical quantum computer or a universal quantum computer. This enables the user to further recreate the quantum operation being performed on the linear-optical quantum device.

In a second example, this application relates to recreating a probability distribution created by a sample linear-optical quantum device. The probability distribution may comprise a probability distribution that is useful for machine learning applications. For example, the probability distribution may comprise a probability distribution obtained by performing boson sampling. Such a probability distribution is hard to estimate classically and cannot be created efficiently on a classical computer. The second example can be used to estimate a quantum operation that can recreate this probability distribution and then reproduce this probability distribution on a quantum computer, such as a linear-optical quantum computer or a suitably large universal quantum computer, thus allowing further samples to be taken from this probability distribution. Thus, this example can improve quantum machine learning by providing an improved way of recreating probability distributions.

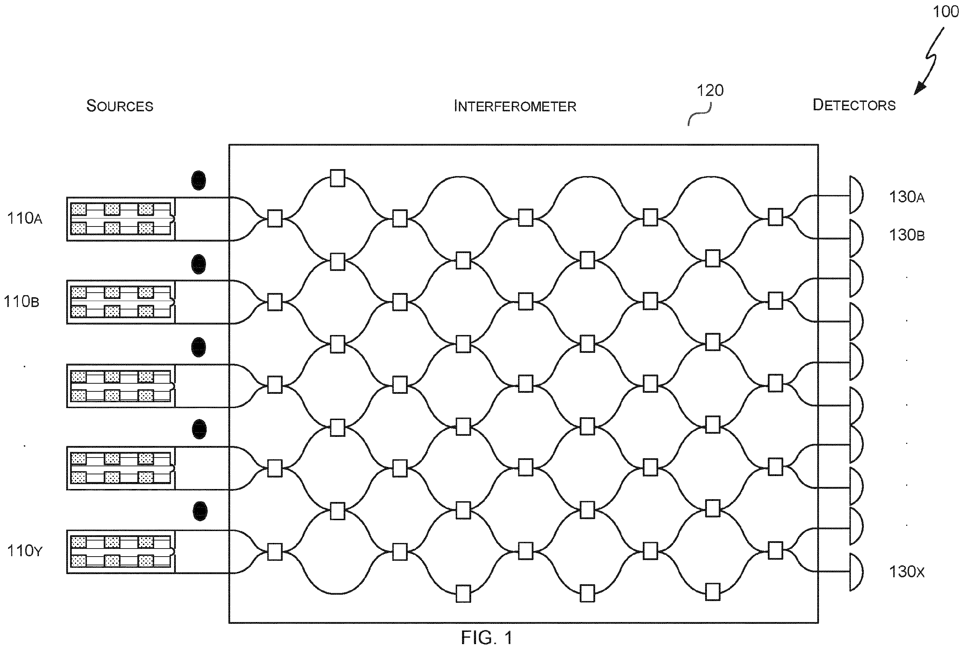

Figure 1 shows an example linear-optical quantum device 100 that may be used in accordance with examples of the application. The linear-optical quantum device 100 comprises a number of photon sources 110a ... 110y, an interferometer 120, and a number of photon detectors 130a ... 130x. The photon sources 110a...110y produce photons which are provided to the interferometer 120. The interferometer implements an operation or interaction on the photons from the photon sources 110a...110y. The photons are then detected by photon detectors 130a...130x. This enables the linear-optical quantum device 100 to be used, for example as a linear-optical quantum computer to implement a desired operation on the photons from the photon sources 110a...110y. In some examples, the interferometer 120 can comprise a series of phase actuators which can be configured by setting each phase actuator to a respective target phase. This enables the interferometer 120 to be programmed to implement a specific quantum operation. As shown in Figure 1, the linear-optical quantum device 100 can comprise a series of phase actuators arranged in a rectangular configuration. In other examples, a triangular or other suitable configuration may be used.

In some examples, the photon sources 110a...110y are single photon sources. The photon detectors 130a...130x may comprise single photon detectors or photon number resolving detectors. In some examples, there are the same number of photon detectors 130a...130x as photon sources 110a... 110y. In other examples, the number of photon sources 110a...110y and the number of photon detectors 130a...130x may differ. In some examples, the photon sources 110a...110y may be multiplexed to enable the photon sources 110a...110y to provide input to multiple ports of the interferometer 120. In one example, this could mean the linear-optical quantum device 100 comprises only a single photon source 110a...110y which is multiplexed to provide an input to any required port of the interferometer 120. The number of photon sources 110a...110y and number of photon detectors 130a...130x can be set by the size of the quantum operation that is to be implemented on the interferometer 120. In other examples, the number of photon sources 110a...110y and photon detectors 130a...130x is fixed based on manufacturing considerations and the entirety of the interferometer 120 may not be used for implementing all quantum operations.

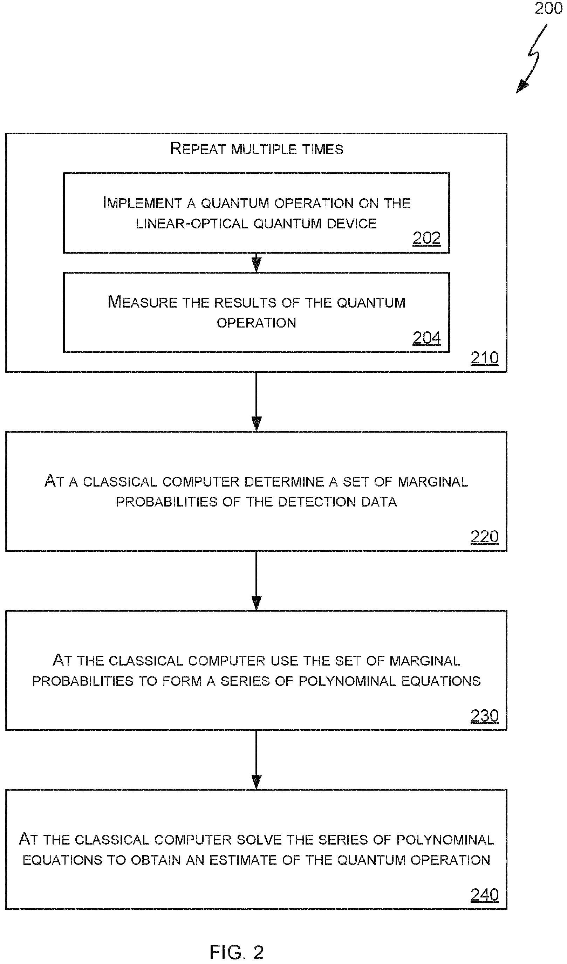

Figure 2 is a flowchart describing a method 200 performed in accordance with a first example of the application. Method 200 is a method of determining an operation being performed by a linear-optical quantum device, such as linear-optical quantum device 100. The linear-optical quantum device comprises a number of photon detectors, such as photon detectors 130a...130x. The linear-optical quantum device is implementing an operation on photons. For example, the linear-optical quantum device may be using an interferometer, such as interferometer 120, to implement an operation on photons from a number of photon sources, such as photon sources 110a...110y. In some examples the number of photon sources 110a...110y may comprise one photon source. In other examples, the number of photon sources 110a...110y is above one. The number of photon sources 110a...110y is above zero. The interferometer may comprise a number of phase actuators that can be used to implement quantum operations by setting each phase actuator of the number of phase actuators to a target phase.

Method 200 enables the operation being performed by the linear-optical quantum device to be determined. This could be used to for example, to characterize the linear-optical quantum device and confirm the linear-optical quantum device is performing as expected. This could be used by the owner/user of the linear-optical quantum device to confirm the linear-optical quantum device is performing correctly. This could also be used if the linear-optical quantum device is a third-party device in a cloud to confirm the third-party is implementing the operation requested of them. This could also be used to determine a quantum operation being performed by a linear-optical quantum device setup by a third party or to determine and then recreate a quantum operation that leads to a particularly desirable output state.

Method 200 starts with step 210 where information is determined from the linear-optical quantum device. Step 210 comprises two stages, step 202 where a quantum operation is implemented on the linear-optical quantum device and step 204 where the results of the quantum operation are measured.

At step 202, a quantum operation is implemented on the linear-optical quantum device. The quantum operation can also be referred to as an interaction or a procedure. Implementing the quantum operation can also be considered to be performing the quantum operation. In some examples, the quantum operation may comprise a desired quantum computation that a user wishes to confirm is being implemented correctly. In this case, implementing the quantum operation on the linear-optical quantum device 202 comprises implementing the desired quantum computation on the linear-optical quantum device. In other examples, the quantum operation may be an unknown operation that leads to a particularly desirable output state. In this case, implementing the quantum operation can comprise setting up the interactions or other behavior that implements the unknown quantum operation. When the linear-optical quantum device is a third-party device, implementing the desired quantum computation on the linear-optical quantum device may comprise instructing the third party to implement the desired quantum computation. In yet further examples, the operation may by an unknown operation, for example, being implemented by a third-party that the user wishes to characterize. In this example, implementing the quantum operation may comprise implementing the unknown operation, for example, by instructing the third party to implement the unknown operation.

Implementing the quantum operation 202 causes the operation to be performed on photons of the linear-optical quantum device. When implementing the quantum operation 202, the photons can be in the same initial state for each implementation of the operation 202 wherein the initial state is known. Alternatively, the initial state of the photons may vary between implementations of the operation 202 but the initial state may be known for each implementation. The photons are then measured in step 204. As mentioned above, the linear-optical quantum device comprises a number of photon detectors. The number of photon detectors is above zero. For example, the linear-optical quantum device may comprise N photon detectors. At step 204 the method comprises determining whether at least one photon is present at each photon detector. If the photon detectors are single photon detectors, this can comprise determining whether each photon detector detected a photon. If the photon detectors are photon number resolving detectors, this can comprise determining a number of photons detected at each detector. Step 204 comprises detecting at each photon detector of the number of photon detectors the presence or lack of presence of at least one photon. The information about the presence or lack of presence of a photon at each photon detector can be considered detection data. The detection data is determined for each repetition. Thus, for each repetition detection data for the repetition is obtained that indicates whether or not a photon was detected at each photon detector. The data obtained across all repetitions can be referred to as detection data.

Steps 202 and 204 combined form step 210 where information is determined from the linear-optical quantum device. In order to obtain suitable information, steps 202 and 204 are repeated multiple times. In other words, the quantum operation is performed/implemented and the outcome of the quantum operation, in the form of the presence or lack of presence of photons at each photon detector is measured multiple times. The quantum operation should be reperformed between each measurement step 204 as measuring the presence or lack of presence of the photons in each detector results in the loss of any superposition formed by the quantum operation. Performing steps 202 and 204 (i.e. combined step 210) multiple times enables statistics to be determined about the probability of each photon detector detecting a photon. As discussed below, this enables information about the quantum operation to be inferred. In some examples, performing steps 202 and 204 multiple times may comprise performing these steps tens, hundred, thousands or even tens of thousands of times.

At step 220, the method comprises using a classical computer to determine a set of marginal probabilities of the detection data using the detection data for each repetition. Each marginal probability of the set of marginal probabilities represents the probability of a certain selection of a specific number of the photon detectors detecting at least one photon irrespective of whether the other photon detectors detected a photon. The marginal probabilities can be considered to be $k^{th}$ order marginal probabilities where k represents the number of photon detectors included in the marginal probability. The marginal probabilities are calculated from the $1^{st}$ order to the $c^{th}$ order. In other words, k takes values from 1 to c. The marginal probabilities are calculated for each possible way of choosing the number of photon detectors included in the marginal probability from the photon detectors.

In terms of marginal probabilities, a $1^{st}$ order marginal probability is the probability of a particular or specific one of the photon detectors detecting at least one photon. The $1^{st}$ order marginal probabilities can be calculated for each photon detector of the number of photon

detectors. A specific 2nd order marginal probability associated with a particular or specific two of the photon detectors is the probability of the particular or specific two of the photon detectors detecting at least one photon. The 2nd order marginal probabilities can be calculated for each pair of photon detectors of the number of photon detectors. In other words, the 2nd order marginal probabilities can be calculated for each possibly group of two photon detectors of the number of photon detectors. In addition, when photon number resolving detectors are used, a 2nd order marginal probability can be calculated for each individual photon detector wherein the 2nd order marginal probability for a single photon detector is the probability of that photon detector detecting two photons. A particular 3rd order marginal probability is the probability of a particular or specific triplet (or group of three) of the photon detectors detecting at least one photon. The 3rd order marginal probabilities can be calculated for each triplet of photon detectors of the number of photon detectors. In other words, the 3rd order marginal probabilities can be calculated for each possible group of three photon detectors of the number of photon detectors. When photon number resolving detectors are used, the 3rd order marginal probabilities include 3rd order marginal probabilities where a single detector has detected more than one photon. For example, a 3rd order marginal probability exists for each single photon detector where that photon detector detected 3 photons. Similarly, 3rd order marginals exist for pairs of photon detectors wherein one photon detector in the pair detects at least two photons and the other at least one photon. In general, a $k^{th}$ order marginal probability is the probability of a particular group of k photon detectors of the number of photon detectors detecting at least one photon. Determining $k^{th}$ order marginal probabilities comprises determining the probability of each group of k photon detectors detecting at least one photon. The number of different combinations of groups of photon detectors for the $k^{th}$ order marginal probabilities is $\binom{N}{k}$ if single photon detectors are used or each photon detector is considered to only detect a single photon or $k^N$ when photon number resolving detectors are used and each photon detector can contribute up to k photons in the marginal.

In specific example, there may be 4 photon detectors and 2nd order marginal probabilities may be being determined. In this case a marginal probability is calculated for the 1st and 2nd, 1st and 3rd, 1st and 4th 2nd and 3rd, 2nd and 4th and 3rd and 4th photon detectors. The marginal probability for the 1st and 2nd photon detectors is the probability of both the 1st and 2nd photon detectors detecting least one photon irrespective of whether the 3rd, 4th and 5th photon detectors detected any photons etc. The skilled person would understand that the case of 4 photon detectors and 2nd order marginal probabilities is a specific example used for simplicity of illustration and the linear-optical quantum device may comprise more photon detectors and other marginal probabilities may be calculated.

Once the marginal probabilities have been found, the method comprises in step 230 the classical computer using the marginal probabilities to form a series of polynomial equations that can be used to determine the quantum operation being implemented by the linear-optical quantum device.

A particular marginal probability can be represented as $P_k(\tau_k)$ wherein $\tau_k \in \{0,1\}^N$, and $|\tau_k| = k$. $\tau_k$ is a vector representing the photon detectors included in that marginal probability such that each photon detector included in the marginal probability is represented by a 1 and each photon detector not included in the marginal probability is represented by a 0 (or with minor adaptions vice versa). The vector has N entries wherein N is the number of photon detectors and each entry represents a single photon detector. In some examples, the first entry can be considered to represent the first photon detector, the second entry the second photon detector, the Nth entry the Nth photon detector etc. However, other mappings could also be used as appropriate and are seen by the skilled person to be equivalent. An entry of 0 in the vector represents the fact that the photon detector represented by that entry is not relevant for the marginal probability and an entry of 1 in the vector represents the fact that the photon detector represented by that entry is relevant for the marginal probability. The skilled person understands that an entry of 1 could be used to represent the photon detector represented by the entry is not relevant and an entry of 0 could be used to represent the photon detector is relevant with only minor adaptions.

The marginal probabilities can be expressed in terms of the quantum operation U being implemented on the photons using equation (1) below:

$$P_k(\tau_k) = \sum_{\sigma_k \in \{1...n\}} \left| Perm\left(U_{\sigma_k,\tau_k}\right) \right|^2 \quad (1)$$

here U is a unitary matrix representation of the quantum operation being implemented on the photons. The marginal probability being calculated by equation (1) is denoted $P_k(\tau_k)$ wherein $\tau_k$ is a vector representing which photon detectors are to be included in the marginal probability wherein the photon detectors are represented by rows of the unitary matrix, U, the marginal probability being calculated is a $k^{th}$ order marginal, $\sigma_k$ is a subset of size k, and the sum is the sum over all such subsets. As explained in more detail later, the subset $\sigma_k$ can be considered a subset of input ports of the linear-optical quantum device implementing the quantum operation wherein the input ports are represented by columns of the unitary matrix, U. The marginal probability is equal to the sum over all possible subsets of k columns (that represent input ports) of the square of the modulus of the permanent of the matrix elements that correspond to the columns from the subset and the rows that represent the photon detectors included in the marginal probability. Equation (1) is used to form a series of polynomial equations which contain variables in the form of the elements of the unitary matrix representation of the quantum operation. The solution to each of these equations are the marginal probabilities which were determined from measurement above. As explained in more detail below, the polynomial equations can be solved to determine the elements of the unitary matrix representation of the quantum operation being implemented on the photons and therefore to provide an estimate of the unitary operation being implemented on the photons.

In relation to forming the polynomial equations $p_k(\tau_k)$, from equation (1), each equation represents a marginal probability $p_k$ for a particular set of detectors which are represents by the vector $\tau_k$. The quantum operation U is being performed on an input number of photons n which are being provided into a number of input ports of the linear-optical quantum device implementing the operation. Each column of the unitary matrix representation can be considered to represent a particular input port of the linear-optical quantum device. In some examples, each input port is being served by its own photon source so the number of columns can also represent the photon sources. However, in other examples, the photon sources are multiplexed and a photon source can provide an input to multiple different input ports. Each row of the unitary matrix representation can be considered to represent a particular photon detector. Each element of the unitary matrix representation can be considered to represent how the quantum operation impacts a photon from a particular photon source when it is detected at a particular photon detector. As discussed above, equation (1) can be used to form equations for marginal probabilities where the equations are expressed in terms of the elements of the unitary matrix representation U. Equation (1) can be used to represent marginal probabilities up to the $n^{th}$ order marginal since if n photons are being provided to the system, this is the maximum number of photon detectors that can detect at least one photon barring any errors in the photon detectors or noise.

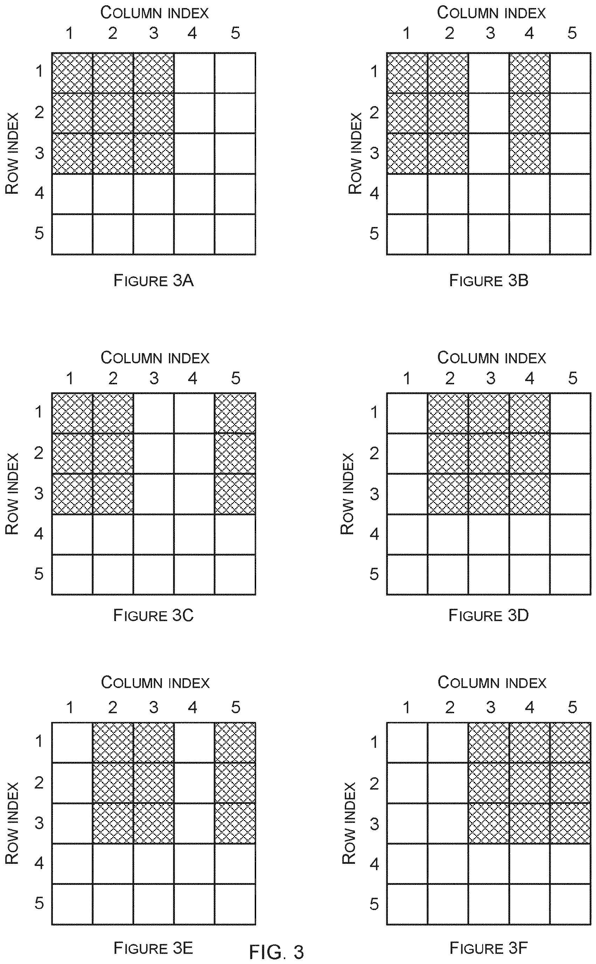

Figure 3 is an illustration of how equation (1) is used to form an equation for a marginal probability for a particular 5x5 unitary matrix representation wherein a specific $3^{rd}$ order marginal probability is being determined for the $1^{st}$, $2^{nd}$ and $3^{rd}$ detector. As can be seen in Figure 3, since the marginal probability is for the $1^{st}$, $2^{nd}$, and $3^{rd}$ photon detectors, the $1^{st}$, $2^{nd}$ and $3^{rd}$ rows are used in the calculation. A square of the modulus of a permanent is calculated using these rows and each possible set of three columns. The matrix elements used to take each square of a modulus of a permanent are shown in Figures 3A, 3B, 3C, 3D, 3E, and 3F. The results of each square of the modulus of the permanent are then summed. The possible sets of three columns represent possible input ports that could have provided the photons detected at the $1^{st}$, $2^{nd}$ and $3^{rd}$ photon detectors. The result is an equation with variables of the relevant elements of the unitary matrix representation, U. Provided enough marginal probabilities have been determined, a suitable number of polynomial equations will have been determined to allow the polynomial equations to be solved to provide an estimate of the unitary matrix representation, U.

Using equation (1) with the marginal probabilities calculated in step 220 results in a series of polynomial equations wherein the unknowns in the polynomial equations are the entries of the unitary matrix representation of the quantum operation. As the number of entries in the unitary matrix representation of the quantum operation grows as $N^2$ and the number of $k^{th}$ order marginal probabilities grows as ($\binom{N}{k}$) for single photon detectors or $k^N$ for photon number resolving detectors, it is possible to determine a value for each entry of the matrix representation by using just the $1^{st}$, $2^{nd}$ and $3^{rd}$ order marginal probabilities provided the system is sufficiently large. Thus, in some examples, forming a series of polynomial equations from the marginal probabilities comprises forming a series of polynomial equations from the $1^{st}$, $2^{nd}$ and $3^{rd}$ order marginal probabilities and equation (1).

After the series of polynomial equations has been formed, the method 200 comprises at step 240 solving, by the classical computer, the series of polynomial equations to obtain an estimate of the quantum operation. In some examples, the series of polynomial equations may be solved using a Groebner basis method. However, other suitable methods of solving the polynomial equations can also be used such as homotopy continuation methods. As mentioned above, the unknowns in the series of polynomial equations are the entries of the unitary matrix representation of the quantum operation. Therefore, solving the polynomial equations results in the classical computer obtaining the entries of the matrix representation of the quantum operation. Thus, solving the polynomial equations results in a unitary matrix representation of the quantum operation that was performed. Given the marginal probabilities calculated in step 220 are estimates based on a number of repetitions, the obtained unitary matrix representation of the quantum operation is an estimate of the quantum operation performed and repeating the process with a different set of repetitions may result in a slightly different estimate. However, assuming a suitable number of repetitions in step 210, the estimate should provide a reasonably accurate estimate of the quantum operation. Therefore, using the above technique and measuring only marginal probabilities it is possible to obtain an estimate of a quantum operation being performed by a linear-optical quantum device. This enables a linear-optical quantum device to be characterized in an efficient and simple manner. The characterization can be used to, for example, confirm that the linear-optical quantum device is performing as expected or confirm a third-party is performing a requested quantum operation.

As mentioned above, the output of method 200 is an estimate of the quantum operation. The accuracy of the estimate can depend upon the number of repetitions performed in step 210 and the size of the system e.g., the number of photons in the linear-optical quantum device and the number of photon detectors. As the size of the system grows then more repetitions may be required to achieve the same accuracy of estimate of the quantum operation. In some examples, 100, 1000, 10,000 or 100,000 repetitions may be used in order to ensure the estimate of the quantum operation is suitably accurate. However, in other examples a different number of repetitions may be used depending upon the desired accuracy of the estimate of the quantum operation and the size of the system.

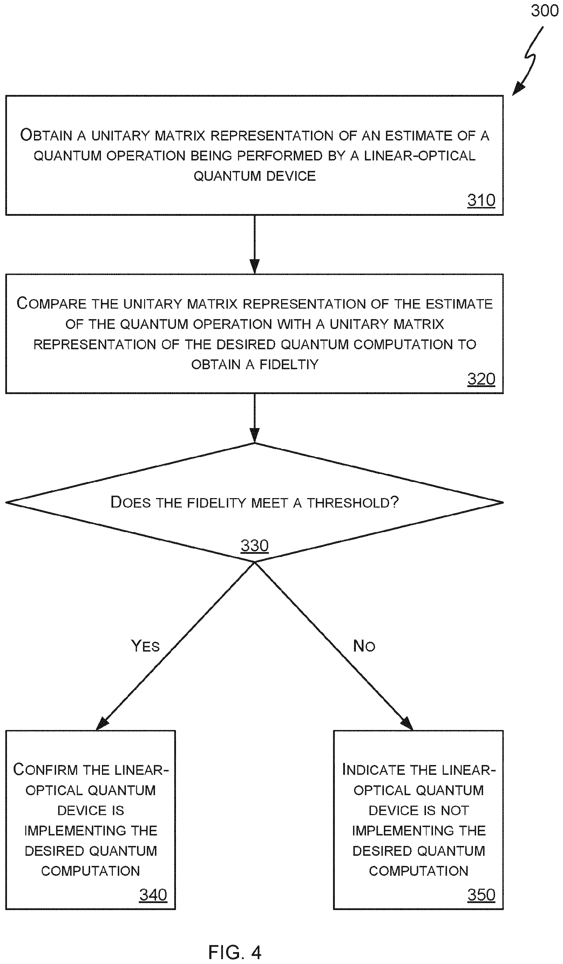

Figure 4 shows method 300 which is a method of confirming/validating the performance of a linear-optical quantum device. In some examples, method 200 can be used as part of method 300 wherein method 300 is the method of confirming/validating the performance of a linear-optical quantum device. In these examples, the linear-optical quantum device is being used to perform a quantum operation that comprises a desired quantum computation. The desired quantum computation can be represented as a unitary matrix representation which can be provided as instructions for implementing the desired quantum operation. For example, a classical computer can process the unitary matrix representation of the desired quantum computation using a Clements or Reck decomposition, depending on the form/arrangement of the interferometer of the linear-optical quantum device, to obtain settings for a linear-optical quantum device to implement the desired quantum computation. In other examples, the desired quantum computation may be provided in a different form and a classical computer may process this to obtain the unitary matrix representation.

Method 300 comprises a step 310 of obtaining, by a classical computer, a unitary matrix representation of an estimate of a quantum operation being performed by a linear-optical quantum device. Step 310 is performed using method 200 described above.

Method 300 then comprises at step 320, comparing, by the classical computer the unitary matrix representation of the estimate of the quantum operation with the unitary matrix representation of the desired quantum computation using fidelity or another distance or similarity measure, such as a Euclidean distance or a Frobenius distance or using any other suitable technique. Step 310 results in a fidelity or similarity score which is a measure of the similarity or distance between the two unitary matrix representations.

In step 330, method 300 further comprises comparing, at the classical computer, the fidelity score to a threshold fidelity wherein the threshold fidelity is a fidelity that indicates the linear-optical quantum device is implementing the desired operation suitably accurately.

In some examples, the threshold fidelity may be 0.999, 0.99 or 0.9. The threshold fidelity can be set based on the desired accuracy of the linear-optical quantum device. When a distance/similarity measure other than fidelity is used, a threshold can be used wherein the threshold comprises a threshold value at which there is a reasonable probability that the quantum operation being implemented by the linear-optical quantum device is the desired quantum computation. The threshold value can depend on the form of the distance or similarity metric used and a degree of error allowed when determining the linear-optical quantum device is performing the desired quantum computation.

At step 340, the method comprises, if the fidelity or similarity score meets the threshold value confirming, by the classical computer, that the linear-optical quantum device is implementing the desired quantum computation. The similarity score meeting the threshold value comprises the similarity score comparing favorably to the threshold value, for example by being at or above the threshold value when the threshold value represents a degree of similarity or fidelity or at or below the threshold value when the threshold value represents a degree of difference. When the similarity score meets the threshold value, the unitary matrix representation of the estimate of the quantum operation and the unitary matrix representation of the desired quantum computation are sufficiently similar to indicate the linear-optical quantum device is implementing the desired quantum operation. Therefore, the linear-optical quantum device can be validated as performing correctly. Alternatively, if the linear-optical quantum device is a third-party device, it can be validated that the third-party is implementing the desired quantum operation on the linear-optical quantum device.

As step 350, the method comprises, indicating, by the classical computer, that the linear-optical quantum device is not implementing the desired quantum computation if the similarity score or fidelity does not meet the threshold value. The similarity score not meeting the threshold value comprises the similar score comparing unfavorably to the threshold value, for example by being below the threshold value when the threshold value represents a degree of similarity or fidelity or above the threshold when the threshold value represents a degree of difference. When the similarity score does not meet the threshold value then the unitary matrix representation of the estimate of the quantum operation and the unitary matrix representation of the desired quantum computation are dissimilar enough to indicate the linear-optical quantum device is not implementing the desired quantum operation. Therefore, any results from the linear-optical quantum device may be inaccurate. In addition, if the linear-optical quantum device is a third-party device then the third-party may not be implementing the desired quantum operation on the linear-optical quantum device. In either case, any results from the linear-optical quantum device may not be accurate so should not be used.

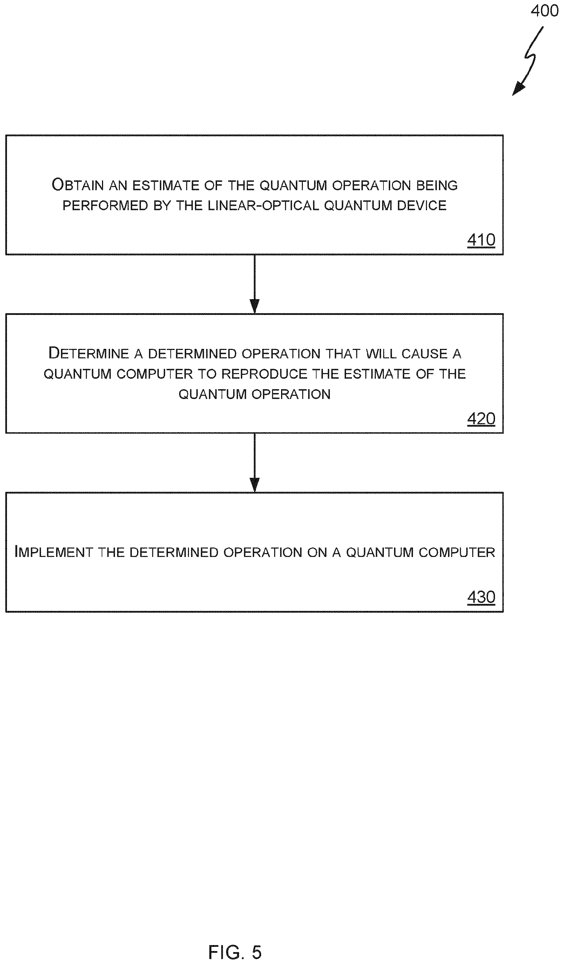

Figure 5 shows a method of recreating a quantum operation being implemented by a linear-optical quantum device. Method 200 can be used as part of method 400 shown in Figure 5, wherein method 400 is the method of recreating a quantum operation being implemented by a linear-optical quantum device. For example, the linear-optical quantum device may be a device performing an operation that a user wishes to characterize and then simulate on a quantum computer different from the linear-optical quantum device. The quantum computer different from the linear-optical quantum device may be a suitably large universal quantum computer or a linear-optical quantum computer. Method 400 comprises step 410 of obtaining, by a classical computer, an estimate of the quantum operation being performed by the linear-optical quantum device. This estimate is obtained by using the method described with respect to method 200 from Figure 2.

Method 400 then comprises, in step 420 determining, by the classical computer at least one determined operation that needs to be implemented by the quantum computer to reproduce the quantum operation being performed by the linear-optical quantum device. This at least one determined operation is found from the estimate of the quantum operation that is output by method 200. In some examples, the quantum computer can also be a linear-optical quantum computer wherein the linear-optical quantum computer comprises at least one photon source, a plurality of phase actuators and a plurality of photon detectors. In these examples, the at least one determined operation comprises a target phase for each of the plurality of phase actuators wherein the target phases are determined using a Clements or Reck decomposition. In other examples, different models of quantum computing may be used in the form of suitably large universal quantum computers, for example a gate-based model on superconducting or atomic qubits and different appropriate decompositions procedures can be used to determine the at least one determined operation from the estimate of the quantum operation.

In step 430, method 400 comprises implementing the at least one determined operation on the quantum computer to recreate the quantum operation being performed by the linear-optical quantum device. This can be done by having the classical computer instruct the quantum computer to implement the at least one determined operation. In the examples where the quantum computer is a linear-optical quantum computer, this comprises setting the phase actuators to their target phases to reproduce the quantum operation and then using the photon sources to cause photons to pass through the phase actuators. In other examples, where a gate-based universal quantum computer is being used, this can comprise implementing the gate-based universal quantum computer on the quantum computer by causing the quantum computer to perform the gates from the gate-based model. In some examples, step 430 can further comprise measuring the outcome of performing the at least one determined operation on the quantum computer and comparing it to the outcome of the linear-optical quantum device to confirm that the at least one determined operation correctly reproduces the quantum operation. For example, when the quantum computer is a linear-optical quantum computer, this may comprise measuring the marginal probabilities to estimate the operation being performed by the linear-optical quantum computer implementing the at least one determined operation. This can then be compared to the estimate of the quantum operation performed by the linear-optical quantum device as described with respect to Figure 4.

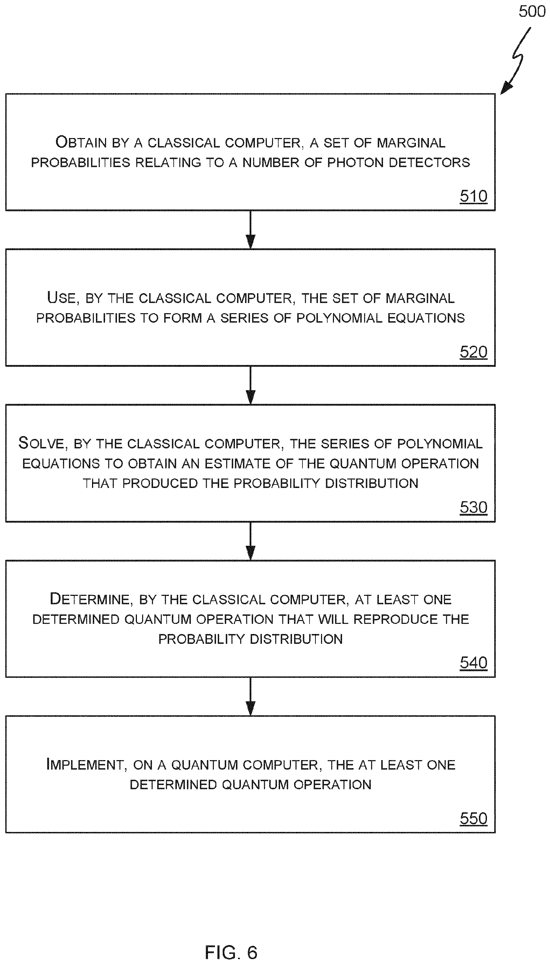

Figure 6 is a flowchart depicting a method 500 in accordance with a second embodiment of this application. In this example, the method comprises reproducing on a quantum computer, such as a linear-optical quantum computer or a suitably sized universal quantum computer, a probability distribution produced by a linear-optical quantum device that comprises a number of photon detectors. The quantum computer is different from the linear-optical quantum device. The method can be used, for example, to train a quantum computer, such as a linear-optical quantum computer to reproduce probability distributions that cannot be created efficiently classically, and which arise from, for example, performing boson sampling. This probability distribution can then be used for machine learning applications for example as part of a Variational Autoencoder (VAR) or a Generative Adversarial Network (GAN).

In step 510, the method comprises obtaining, by a classical computer, a set of marginal probabilities relating to the number of photon detectors. Each marginal probability of the set of marginal probabilities comprises the probability that a specific k for the number of photon detectors detects at least one photon irrespective of whether the other photon detectors detect a photon. k is the order of the marginal probability. For the $k^{th}$ order, marginal probabilities are obtained for each possible choice of a specific k of the number of photon detectors. Thus, for example, for the second order marginal probabilities, a marginal probability is obtained for each possible pair of photon detectors. The marginal probabilities are obtained from $1^{st}$ order through to $c^{th}$ order. In some examples, c is 3 so marginal probabilities are obtained from $1^{st}$ order through to $3^{rd}$ order.

In step 520, the method comprises the classical computer using the set of marginal probabilities to form a series of polynomial equations. These series of polynomial equations can be obtained using the equation

$$P_k(\tau_k) = \sum_{\sigma_k \in \{1...n\}} \left| Perm\left(U_{\sigma_k,\tau_k}\right) \right|^2 \ (1)$$

as explained with respect to step 230 above. The unknowns in this series of polynomial equations represent the entries of a unitary matrix representation U of a quantum operation that resulted in the probability distribution to be recreated.

As mentioned above with respect to method 200, in some examples the series of polynomial equations are obtained from the first, second and third order marginal probabilities. As the number of elements in the unitary matrix representation grows as $N^2$ while the number of $k^{th}$ order marginals grows as $\binom{N}{k}$ for single photon detectors and $k^N$ for multi-photon detectors, for large enough system, obtaining third order marginals should provide a large enough sample for the elements of the unitary matrix to not be undetermined. However, in very small systems, it may be necessary to obtain results for higher order marginals.

In step 530, the method comprises the classical computer solving the series of polynomial equations to obtain the entries of the unitary matrix representation of the quantum operation that resulted in the probability distribution to be crated. This can be done, for example using a Groebner basis method or any other suitable method such as homotopy continuation methods. Once the entries of the unitary matrix have been obtained by solving the series of polynomial equations, they are used to produce an estimate of the quantum operation that produced the probability distribution wherein the estimate of the quantum operation takes the form of a unitary matrix.

At step 540, the method comprises determining, by the classical computer, at least one determined operation that needs to be implemented by the quantum computer, such as a linear-optical quantum computer or a universal quantum computer, to reproduce the probability distribution using the estimate of the quantum operation. In some examples the quantum computer is another linear-optical quantum computer that comprises a plurality of photon sources, a plurality of phase actuators and a plurality of photon detectors. In this example, the determining the at least one operation comprises using a Clement or Reck decomposition on the estimate of the quantum operation to find a target phase for each phase actuator that would cause the linear-optical quantum computer to reproduce the quantum operation that resulted in the probability distribution. In one example, a Clement decomposition is used when the linear-optical quantum computer has a rectangular layout and a Reck decomposition when the linear-optical quantum computer has a triangular layout. In other examples, a gate-based architecture of quantum computing could be used for a universal quantum computer of suitable size. In such examples, the determining the at least one determined operation comprises using standard gate decomposition techniques on the estimate of the quantum operation to determine a series of operations that implement the estimate of the quantum operation.

In step 550, the method comprises, implementing on the quantum computer, the at least one determined operation to reproduce the probability distribution. This can be done by having the classical computer control the quantum computer to implement the at least one determined operation. When the quantum computer is a linear-optical quantum computer, this can be done by tuning each phase actuator of the plurality of phase actuators to its respective target phase. The photon sources can then be used to provide photons to the phase actuators resulting in an implementation of the at least one determined operation on the photons. When the quantum computer is a gate-based quantum computer, this can be done by implementing the series of operations that implement the estimate of the quantum operation. Once the probability distribution has been recreated it can be used to take samples and for other machine learning applications such as generating handwriting, converting text to images, and generating representative patient files.

In some examples of method 500, the set of marginal probabilities are obtained by measuring the linear-optical quantum device. This is done by repeatedly allowing the linear-optical quantum device to implement the quantum operation that creates the probability distribution on photons of the linear-optical quantum device then detecting the presence or lack of presence of at least one photon at each photon detector. When implementing the quantum operation, the photons can be in the same initial state for each implementation of the operation wherein the initial state is known. Alternatively, the initial state of the photons may vary between implementations of the operation, but the initial state may be known for each implementation. By performing this process repeatedly, it is possible to calculate, the marginal probabilities at a classical computer using the resultant detection data. For example, after a large enough number of repetitions, it is possible to work out the probability each photon detector determines the presence of at least one photon and the probability each pair of photon detectors both determine the presence of at least one photon etc. The implementing the quantum operation can comprise, for example, performing a known set of actions that implement the quantum operation even though the quantum operation is unknown. The implementing the quantum operation can alternatively comprise performing a process that results in a useful quantum probability distribution, for example performing boson sampling or performing a process that results in a probability distribution which represents set of samples for machine learning.

In some examples the number of photon detectors are photon number resolving detectors. In these examples, detecting at each photon detector the presence or lack of presence of at least one photon comprises determining a number of photons present at each photon number resolving detector. In other examples, the number of photon detectors are single photon detectors. In these examples, determining the presence or lack of presence of a photon comprises determining whether a photon was detected at each single photon detector.

Once the probability distribution has been recreated on the quantum computer, such as a quantum-optical quantum computer or a universal quantum computer, it can be used to generate samples that can be used for machine learning, for example for generating handwriting, converting text to images, and generating representative patient files.

As with method 200, method 500 can further comprise confirming that the operation performed by the at least one determined operation correctly reproduces the probability distribution implemented by the linear-optical quantum device. For example, when the quantum computer is a linear-optical quantum computer, the marginal probabilities can be determined for implementations of the at least one determined operation. These can then be used to form a series of polynomial equations and the resultant unitary matrix representation of the operation being performed by the linear-optical quantum computer can be determined. This can then be compared with the unitary matrix representation used to form the at least one determined operation as defined with respect to method 300. It can therefore be confirmed that the quantum computer is indeed correctly reproducing the probability distribution.

In summary, in some examples, the above methods enable an estimate of an operation being performed/implemented by a linear-optical quantum device to be determined. The linear-optical quantum device comprises a number of photon detectors. The marginal probabilities are determined for the photon detectors after performance of the quantum operation. The marginal probabilities are used to form a series of polynomial equations which are then solved to determine a unitary matrix representation of the quantum operation. This representation can then be used to either confirm the linear-optical quantum device is performing as expected or to recreate a probability distribution from the linear-optical quantum device.

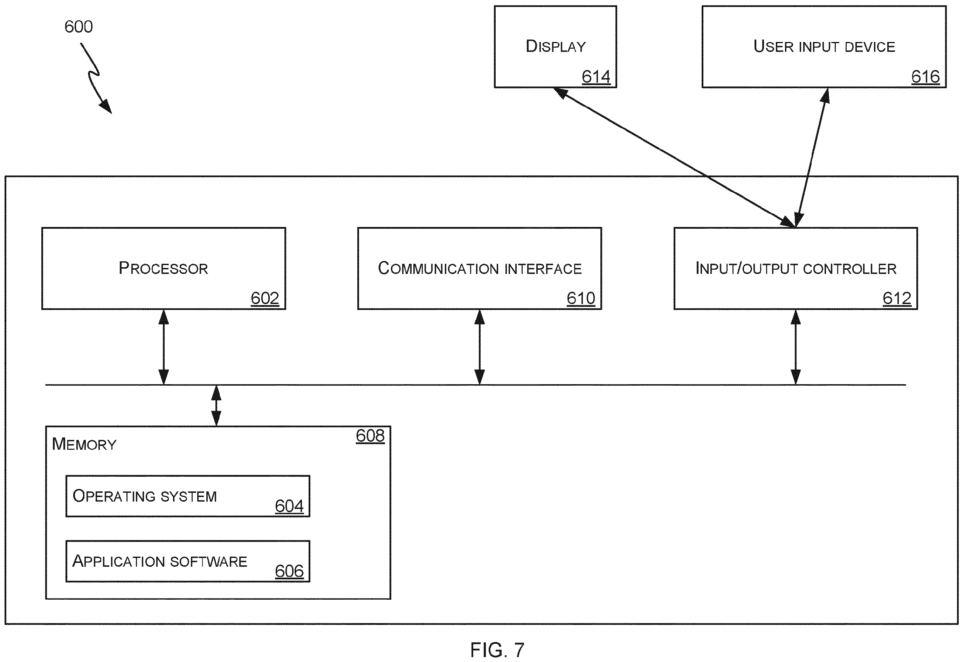

Figure 7 illustrates various components of an exemplary classical computing-based device 600 which may be implemented as any form of a computing and/or electronic device, and in which the steps of the above methods implemented by a classical computer may be implemented.

Classical computing-based device 600 comprises one or more processors 602 which may be microprocessors, controllers or any other suitable type of processors for processing computer executable instructions to control the operation of the device in order to implement the steps of the methods above performed by a classical computer. In some examples, for example where a system on a chip architecture is used, the processors 602 may include one or more fixed function blocks (also referred to as accelerators) which implement a part of the method performed by the classical computer in hardware (rather than software or firmware). Platform software comprising an operating system 604 or any other suitable platform software may be provided at the computing-based device to enable application software 606 to be executed on the device.

The computer executable instructions may be provided using any computer-readable media that is accessible by computing based device 600. Computer-readable media may include, for example, computer storage media such as memory 608 and communications media. Computer storage media, such as memory 608, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (memory 608) is shown within the computing-based device 600 it will be appreciated that the storage may be distributed or located remotely and accessed via a network or other communication link (e.g. using communication interface 610).

The computing-based device 600 also comprises an input/output controller 612 arranged to output display information to a display device 614 which may be separate from or integral to the computing-based device 600. The display information may provide a graphical user interface. The input/output controller 612 is also arranged to receive and process input from one or more devices, such as a user input device 616 (e.g. a mouse or a keyboard). This user input may be used to control the classical computing-based device 600. In an example the display device 614 may also act as the user input device 616 if it is a touch sensitive display device. The input/output controller 612 may also output data to devices other than the display device, e.g. a locally connected printing device (not shown in Figure 7).

The term 'classical computer' is used herein to refer to any device with processing capability such that it can execute instructions. Those skilled in the art will realize that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

The steps of the methods described herein may be carried out in any suitable order, or simultaneously where appropriate. Additionally, individual blocks may be deleted from any of the methods without departing from the spirit and scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the spirit or scope of this invention.

**Claims**

1. A method of determining a quantum operation being implemented by a linear-optical quantum device, wherein the linear-optical quantum device comprises a number of photon detectors, the method comprising:

   repeatedly performing a method comprising:

   implementing the quantum operation on the linear-optical quantum device; and
   detecting at each photon detector of the number of photon detectors the presence or lack of presence of at least one photon to form detection data for each repetition of the quantum operation;

the method further comprising:

   determining, by a classical computer, a set of marginal probabilities using the detection data for each repetition of the quantum operation, wherein:

   the marginal probabilities in the set of marginal probabilities comprise $k^{th}$ order marginal probabilities wherein k ranges from 1 to c;
   a specific $k^{th}$ order marginal probability comprises the probability of at least a specific k of the number of photon detectors detecting a photon; and
   the $k^{th}$ order marginal probabilities comprise the specific $k^{th}$ order marginal probabilities for each possible selection of a specific k of the number of photon detectors from the number of photon detectors;

   forming, by the classical computer, a series of polynomial equations wherein the solutions to the series of polynomial equations are the set of marginal probabilities; and
   solving, by the classical computer, the series of polynomial equations to obtain an estimate of the quantum operation.

2. The method of claim 1 wherein:

   the quantum operation comprises a desired quantum computation that can be represented by a unitary matrix representation of the desired quantum computation;
   the estimate of the quantum operation comprises a unitary matrix representation of the estimate of the quantum operation; and the method further comprises:
   confirming, by the classical computer, whether the linear-optical quantum device is implementing the desired quantum computation by:

   comparing the unitary representation of the estimate of the quantum operation to the unitary matrix representation of the desired quantum computation using fidelity to obtain a fidelity score;
   comparing the fidelity score to a threshold; and
   confirming the linear-optical quantum device is implementing the desired quantum computation in response to the fidelity score meeting the threshold.

3. The method of claim 1 further comprising:
   reproducing the quantum operation on a quantum computer different from the linear-optical quantum device by:

determining, by the classical computer, at least one determined operation that needs to be implemented by the quantum computer to reproduce the quantum operation using the estimate of the quantum operation;

instructing, by the classical computer, the quantum computer to implement the at least one determined operation; and

implementing, by the quantum computer, the at least one determined operation.

4. A method of reproducing, on a quantum computer, a probability distribution produced by a linear-optical quantum device that comprises a number of photon detectors, the method comprising:

obtaining, by a classical computer, a set of marginal probabilities relating to the number of photon detectors, wherein

the marginal probabilities in the set of marginal probabilities comprise $k^{th}$ order marginal probabilities wherein k ranges from 1 to c;

a specific $k^{th}$ order marginal probability comprises the probability of at least a specific k of the number of photon detectors detecting a photon; and

the $k^{th}$ order marginal probabilities comprise the specific $k^{th}$ order marginal probabilities for each possible selection of a specific k of the number of photon detectors from the number of photon detectors;

forming, by the classical computer, a series of polynomial equations wherein the solutions to the series of polynomial equations are the marginal probabilities;

solving, by the classical computer, the series of polynomial equations to obtain an estimate of the quantum operation that produced the probability distribution;

determining, by the classical computer, at least one determined operation that needs to be implemented by the quantum computer to reproduce the probability distribution using the estimate of the quantum operation;

instructing, by the classical computer, the quantum computer to implement the at least one determined operation; and

implementing, by the quantum computer, the at least one determined operation to reproduce the probability distribution.

5. The method of claim 4 wherein obtaining the set of marginal probabilities comprises:

repeatedly performing a method comprising:

implementing the quantum operation on the linear-optical quantum device;

detecting at each photon detector of the number of photon detectors the presence or lack of presence of at least one photon to form detection data for each repetition of the quantum operation;

and the method further comprises:

determining, by the classical computer, the marginal probabilities using the detection data for each repetition.

6. The method of any of claims 1 to 3 and 5 wherein:

each photon detector of the number of photon detectors comprises a photon number resolving detector; and

detecting at each photon detector of the number of photon detectors the presence or lack of presence of at least one photon comprises determining a number of photons present at each photon number resolving detector.

7. The method of any previous claim wherein:

the marginal probabilities in the set of marginal probabilities comprise $k^{th}$ order marginal probabilities wherein k ranges from 1 to 3 such that marginal probabilities in the set of marginal probabilities comprise first order, second order and third order marginal probabilities; and

forming, by the classical computer, a series of polynomial equations from the marginal probabilities comprises forming the series of polynomial equations from the first order, the second order and the third order marginal probabilities.

8. The method of any of claims 3 to 7 wherein:

the quantum computer comprises a linear-optical quantum computer comprising at least one photon source, a plurality of photon detectors, and a plurality of phase actuators;

determining, by the classical computer, at least one determined operation comprises using a Clements decomposition or a Reck decomposition on the estimate of the quantum operation to determine a target phase for each phase actuator of the plurality of phase actuators;

instructing, by the classical computer, the quantum computer to implement the at least one determined operation comprises tuning each phase actuator of the plurality of phase actuators to its respective target phase; and

implementing, by the quantum computer, the at least one determined operation comprises using the at least one photon source to provide a plurality of photons to the plurality of phase actuators.

9. The method of any previous claim wherein solving, by the classical computer, the series of polynomial equations comprises solving, by the classical computer, the series of polynomial equations using a Groebner basis method.

10. A system comprising:

a linear-optical quantum device comprising:

at least one photon source, wherein each photon source of the at least one photon source is configured to repeatedly output a photon;
a number of phase actuators configured to repeatedly implement a quantum operation on the photons output by the plurality of photon sources; and
a number of photon detectors, wherein each photon detector of the number of photon detectors is configured to repeatedly detect the presence or lack of presence of a photon at the respective photon detector to form detection data for the number of photon detectors; and

a classical computer comprising:

a processor; and
a memory, the memory comprising computer-readable instructions that when implemented by the processor cause the processor to:

determine a set of marginal probabilities using the detection data, wherein:

the marginal probabilities in the set of marginal probabilities comprise $k^{th}$ order marginal probabilities wherein k ranges from 1 to c;
a specific $k^{th}$ order marginal probability comprises the probability of at least a specific k of the number of photon detectors detecting a photon; and
the $k^{th}$ order marginal probabilities comprise the specific $k^{th}$ order marginal probabilities for each possible selection of a specific k of the number of photon detectors from the number of photon detectors;

form a series of polynomial equations wherein the solutions to the series of polynomial equations are the set of marginal probabilities; and
solve the series of polynomial equations to obtain an estimate of the quantum operation.

11. A system configured to reproduce a probability distribution produced by a linear-optical quantum device comprising a number of photon detectors, the system comprising:
a classical computer comprising:

a processor; and
a memory, the memory comprising computer-readable instructions that when implemented by the processor are configured to cause the processor to:

obtain a set of marginal probabilities relating to the number of photon detectors, wherein

the marginal probabilities in the set of marginal probabilities comprise $k^{th}$ order marginal probabilities wherein k ranges from 1 to c;
a specific $k^{th}$ order marginal probability comprises the probability of at least a specific k of the number of photon detectors detecting a photon; and
the $k^{th}$ order marginal probabilities comprise the specific $k^{th}$ order marginal probabilities for each possible selection of a specific k of the number of photon detectors from the number of photon detectors;

form a series of polynomial equations wherein the solutions to the series of polynomial equations are the marginal probabilities;
solve the series of polynomial equations to obtain an estimate of the quantum operation that produced the probability distribution;
determine, using the estimate of the quantum operation, at least one determined operation that needs to be implemented by a quantum computer to cause the quantum computer to reproduce the probability distribution; and
instruct the quantum computer to implement the at least one determined operation; and the system further comprises:

the quantum computer comprising a quantum processor configured to:

implement, in response to instructions from the classical computer, the at least one determined operation to reproduce the probability distribution.

12. The system of claim 11 further comprising:
the linear-optical quantum device wherein the linear-optical quantum device comprises:

a quantum processor configured to repeatedly implement the quantum operation that produces the probability distribution; and
the number of photon detectors, wherein each photon detector of the number of photon detectors is configured to repeatedly detect the presence or lack of presence of a photon at the respective photon detector to form detection data for the number of photon detectors.

13. The system of claim 11 or claim 12 wherein:

the quantum computer comprises a linear-optical quantum computer comprising at least one photon source and a plurality of photon detectors;
the quantum processor of the quantum computer comprises a plurality of phase actuators;
determining the at least one determined operation comprises using a Clements decomposition or a Reck decomposition on the estimate of the quantum operation to determine a target phase for each phase actuator of the plurality of phase actuators;
instructing, by the classical computer, the quantum computer to implement the at least one determined operation comprises tuning each phase actuator of the plurality of phase actuators to its respective target phase; and
implementing, by the quantum computer, the at least one determined operation comprises using the at least one photon source to provide a plurality of photons to the plurality of phase actuators.

14. The system of claim 10 or claim 13 wherein solving the series of polynomial equations comprises solving the series of polynomial equations using a Groebner basis method.

15. The system of any of claims 10 to 14 wherein:

the marginal probabilities in the set of marginal probabilities comprise $k^{th}$ order marginal probabilities wherein k ranges from 1 to 3 such that marginal probabilities in the set of marginal probabilities comprise first order, second order and third order marginal probabilities; and
forming a series of polynomial equations from the marginal probabilities comprises forming the series of polynomial equations from the first order, the second order and the third order marginal probabilities.

SOURCES                    INTERFEROMETER        120          DETECTORS

100

110A                                                          130A
                                                              130B

110B

110Y                                                          130X

EP 4 625 266 A1

18

FIG. 1

200

REPEAT MULTIPLE TIMES

IMPLEMENT A QUANTUM OPERATION ON THE
LINEAR-OPTICAL QUANTUM DEVICE

<u>202</u>

MEASURE THE RESULTS OF THE QUANTUM
OPERATION

<u>204</u>

<u>210</u>

AT A CLASSICAL COMPUTER DETERMINE A SET OF MARGINAL
PROBABILITIES OF THE DETECTION DATA

<u>220</u>

AT THE CLASSICAL COMPUTER USE THE SET OF MARGINAL
PROBABILITIES TO FORM A SERIES OF POLYNOMINAL EQUATIONS

<u>230</u>

AT THE CLASSICAL COMPUTER SOLVE THE SERIES OF POLYNOMINAL
EQUATIONS TO OBTAIN AN ESTIMATE OF THE QUANTUM OPERATION

<u>240</u>

FIG. 2

FIGURE 3A

FIGURE 3B

FIGURE 3C

FIGURE 3D

FIGURE 3E

FIG. 3

FIGURE 3F

300

OBTAIN A UNITARY MATRIX REPRESENTATION OF AN ESTIMATE OF A QUANTUM OPERATION BEING PERFORMED BY A LINEAR-OPTICAL QUANTUM DEVICE

310

COMPARE THE UNITARY MATRIX REPRESENTATION OF THE ESTIMATE OF THE QUANTUM OPERATION WITH A UNITARY MATRIX REPRESENTATION OF THE DESIRED QUANTUM COMPUTATION TO OBTAIN A FIDELTIY

320

DOES THE FIDELITY MEET A THRESHOLD?

330

YES

NO

CONFIRM THE LINEAR-OPTICAL QUANTUM DEVICE IS IMPLEMENTING THE DESIRED QUANTUM COMPUTATION

340

INDICATE THE LINEAR-OPTICAL QUANTUM DEVICE IS NOT IMPLEMENTING THE DESIRED QUANTUM COMPUTATION

350

FIG. 4

400

OBTAIN AN ESTIMATE OF THE QUANTUM OPERATION BEING PERFORMED BY THE LINEAR-OPTICAL QUANTUM DEVICE

410

DETERMINE A DETERMINED OPERATION THAT WILL CAUSE A QUANTUM COMPUTER TO REPRODUCE THE ESTIMATE OF THE QUANTUM OPERATION

420

IMPLEMENT THE DETERMINED OPERATION ON A QUANTUM COMPUTER

430

FIG. 5

500

OBTAIN BY A CLASSICAL COMPUTER, A SET OF MARGINAL
PROBABILITIES RELATING TO A NUMBER OF PHOTON DETECTORS

510

USE, BY THE CLASSICAL COMPUTER, THE SET OF MARGINAL
PROBABILITIES TO FORM A SERIES OF POLYNOMIAL EQUATIONS

520

SOLVE, BY THE CLASSICAL COMPUTER, THE SERIES OF POLYNOMIAL
EQUATIONS TO OBTAIN AN ESTIMATE OF THE QUANTUM OPERATION
THAT PRODUCED THE PROBABILITY DISTRIBUTION

530

DETERMINE, BY THE CLASSICAL COMPUTER, AT LEAST ONE
DETERMINED QUANTUM OPERATION THAT WILL REPRODUCE THE
PROBABILITY DISTRIBUTION

540

IMPLEMENT, ON A QUANTUM COMPUTER, THE AT LEAST ONE
DETERMINED QUANTUM OPERATION

550

FIG. 6

FIG. 7

**EUROPEAN SEARCH REPORT**

Europäisches Patentamt
European Patent Office
Office européen des brevets

**Application Number**

EP 24 16 6153

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BENOIT SERON ET AL: "Efficient validation of Boson Sampling from binned photon-number distributions", ARXIV.ORG, CORNELL UNIVERSITY LIBRARY, 201 OLIN LIBRARY CORNELL UNIVERSITY ITHACA, NY 14853, 19 December 2022 (2022-12-19), XP091398094, * abstract; Sections 1-5; figures 1, 3 * | 1-15 | INV. G06N10/40 |
| A | BENJAMIN VILLALONGA ET AL: "Efficient approximation of experimental Gaussian boson sampling", ARXIV.ORG, CORNELL UNIVERSITY LIBRARY, 201 OLIN LIBRARY CORNELL UNIVERSITY ITHACA, NY 14853, 2 February 2022 (2022-02-02), XP091156119, * abstract; Sections I-IV; Appendix A-H * | 1-15 | |
| A | JELMER J RENEMA: "Marginal probabilities in boson samplers with arbitrary input states", ARXIV.ORG, CORNELL UNIVERSITY LIBRARY, 201 OLIN LIBRARY CORNELL UNIVERSITY ITHACA, NY 14853, 29 December 2020 (2020-12-29), XP081848829, * abstract; Sections 1-6 * | 1-15 | **TECHNICAL FIELDS SEARCHED (IPC)** G06N G02F |

The present search report has been drawn up for all claims

| Place of search | Date of completion of the search | Examiner |
|---|---|---|
| The Hague | 13 September 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)